## Europäisches Patentamt

## European Patent Office

## Office européen des brevets

(11) Veröffentlichungsnummer: **0 209 824**
**B1**

(12) **EUROPÄISCHE PATENTSCHRIFT**

(45) Veröffentlichungstag der Patentschrift:
27.09.89

(21) Anmeldenummer: 86109626.1

(22) Anmeldetag: 14.07.86

(51) Int. Cl.⁴: **H 04 Q 11/04**

(54) Digitalsignal-Kanalverteiler.

(30) Priorität: 16.07.85 DE 3525370

(43) Veröffentlichungstag der Anmeldung:
28.01.87 Patentblatt 87/5

(45) Bekanntmachung des Hinweises auf die Patenterteilung:
27.09.89 Patentblatt 89/39

(84) Benannte Vertragsstaaten:
AT BE CH DE FR GB IT LI NL SE

(56) Entgegenhaltungen:
EP-A- 0 142 662

NATIONAL TELECOMMUNICATIONS CONFERENCE,
New Orleans, US, 29. November - 3. Dezember 1981,
Seiten B1.1.1-B1.1.7, IEEE, New York, US; J.R. COLTON
et al.: "DACS features and applications"
PATENTS ABSTRACTS OF JAPAN, Band 7, Nr. 204
(E-197)[1349], 9. September 1983; & JP-A-58 101 595
(HITACHI SEISAKUSHO K.K.) 16-06-1983
COMMUTATION ET TRANSMISSION, Oktober 1978,
pages 597-612, Paris, FR; A. TEXIER et al.: "Système
transmic. 11. Répartiteur temporel centre de
maintenance"

(73) Patentinhaber: Siemens Aktiengesellschaft,
Wittelsbacherplatz 2, D-8000 München 2 (DE)

(72) Erfinder: Nirschl, Heinrich, Dipl.-Ing.,
Rotkäppchenstrasse 56, D-8000 München 83 (DE)

## Beschreibung

Die Erfindung bezieht sich auf einen Digitalsignal-Kanalverteiler mit n aus jeweils einem Eingang und einem Ausgang bestehenden Toren mit einem ersten Unter-Digitalsignal-Kanalverteiler mit n/2 aus jeweils einem Eingang und einem Ausgang bestehenden Schnittstellen, deren Eingänge mit den entsprechenden Eingängen der ersten Hälfte der Tore und deren Ausgänge mit den entsprechenden Ausgängen der zweiten Hälfte der Tore verbunden sind, und mit einer Überwachung, die Multiplex-Adressen, Multiplex-Melde-Informationen und einen Multiplextakt abgibt, sowie mit einem zweiten Unter-Digitalsignal-Kanalverteiler mit n/2 aus jeweils einem Eingang und einem Ausgang bestehenden Schnittstellen, deren Eingänge mit den entsprechenden Eingängen der zweiten Hälfte der Tore und deren Ausgänge mit den entsprechenden Ausgängen der ersten Hälfte der Tore verbunden sind, und mit einer Überwachung, die Multiplex-Adressen, Multiplex-Melde-Informationen und einen Multiplextakt abgibt.

Aus der Siemens-Druckschrift «Digitalsignal-Kanalverteiler DKVt2», Bestell-Nr. S42023-A750-A1-1-29 ist bereits ein Digitalsignal-Kanalverteiler bekannt, mit dem sich die 64-kbit/s-Kanäle von acht seine Tore passierenden 2-Mbit/s-Signalen beliebig rangieren lassen. Für besondere Betriebsfälle kann die maximale Rangierkapazität durch das Zusammenschalten von zwei Digitalsignal-Kanalverteiler DKVt2 verdoppelt werden, die im folgenden als Unter-Digitalsignal-Kanalverteiler bezeichnet sind. Jeder der beiden Unter-Digitalsignal-Kanalverteiler DKVt2 bearbeitet dann nur noch eine Signalrichtung. Verbindungsleitungen zwischen beiden Geräten sorgen für die zwischen beiden Signalrichtungen erforderliche Kopplung, z.B. Einblenden der Meldebits.

Ein Digitalsignal-Kanalverteiler ist weiter aus der Europäischen Patentanmeldung 0 142 662 A1 bekannt.

Aufgabe der Erfindung ist es, die Zusammenschaltung von zwei Digitalsignal-Kanalverteilern praktisch auf einfache Weise zu realisieren.

Bei einer ersten Variante wird von einem Digitalsignal-Kanalverteiler der einleitend geschilderten Art ausgehend diese Aufgabe erfindungsgemäß dadurch gelöst, daß in jedem Unter-Digitalsignal-Kanalverteiler eine von den eigenen Multiplex-Adressen gesteuerte Taktanpassung für Multiplex-Melde-Informationen vorgesehen ist und daß Verbindungen für die Multiplex-Adressen, Multiplex-Melde-Informationen und die Multiplextakte von der Überwachung des ersten Unter-Digitalsignal-Kanalverteilers zur Taktanpassung des zweiten Unter-Digitalsignal-Kanalverteilers und von der Überwachung des zweiten Unter-Digitalsignal-Kanalverteilers zur Taktanpassung des ersten Unter-Digitalsignal-Kanalverteilers vorgesehen sind.

Bei einer zweiten Variante wird diese Aufgabe ausgehend von einem Digitalsignal-Kanalverteiler der einleitend geschilderten Art, bei dem die Multiplex-Adressen und die Multiplextakte aber nicht zwischen den Unter-Digitalsignal-Kanalverteilern ausgetauscht werden müssen, erfindungsgemäß dadurch gelöst, daß in einem der beiden Unter-Digitalsignal-Kanalverteiler als «Master» eine Synchronisiereinrichtung vorgesehen ist, die an die Taktversorgung des anderen Unter-Digitalsignal-Kanalverteilers ihren Multiplextakt und ein Synchronisier(Rücksetz)-Signal, daß Verbindungen für die Multiplex-Melde-Informationen von der Überwachung des ersten Unter-Digitalsignal-Kanalverteilers zu einem Multiplex-Meldeinformationsausgang des zweiten Unter-Digitalsignal-Kanalverteilers und von der Überwachung des zweiten Unter-Digitalsignal-Kanalverteilers zu einem Multiplex-Meldeinformationsausgang des ersten Unter-Digitalsignal-Kanalverteilers vorgesehen sind.

Die Tore des Digitalsignal-Kanalverteilers und die Schnittstellen der Unter-Digitalsignal-Kanalverteiler haben dieselbe Bedeutung. Sie wurden nur aus Gründen der besseren Unterscheidbarkeit verschieden benannt.

Haben die Unter-Digitalsignal-Kanalverteiler je acht Tore, so erhält der erfindungsgemäße Digitalsignal-Kanalverteiler sechzehn Tore. Zwischen diesen kann jedoch nicht beliebig rangiert werden. Ein Unter-digitalsignal-Kanalverteiler übernimmt vielmehr die Übertragung in einer Richtung, während der andere Unter-Digitalsignal-Kanalverteiler die Übertragung in der Gegenrichtung bewirkt. Zwischen der Hälfte der Tore, deren Eingängen der eine Unter-Digitalsignal-Kanalverteiler zugeordnet ist, und der anderen Hälfte kann beliebig rangiert werden. Innerhalb einer Hälfte ist dies jeweils möglich. Für einen solchen Digitalsignal-Kanalverteiler besteht jedoch ein großer Bedarf.

Anhand von Ausführungsbeispielen wird die Erfindung nachstehend näher erläutert.

Figur 1 zeigt einen Digitalsignal-Kanalverteiler der ersten und der zweiten Variante lediglich mit den Verbindungen zwischen seinen Toren und den Schnittstellen der Unter-Digitalsignal-Kanalverteiler,

Figur 2 zeigt Schaltungsanpassungen in den Unter-Digitalsignal-Kanalverteilern für die erste Variante,

Figur 3 zeigt eine Taktanpassung für die erste Variante,

Figur 4 zeigt einen Pulsplan zur ersten Variante und

Figur 5 zeigt Schaltungsanpassungen in den Unter-Digitalsignal-Kanalverteilern für die zweite Variante.

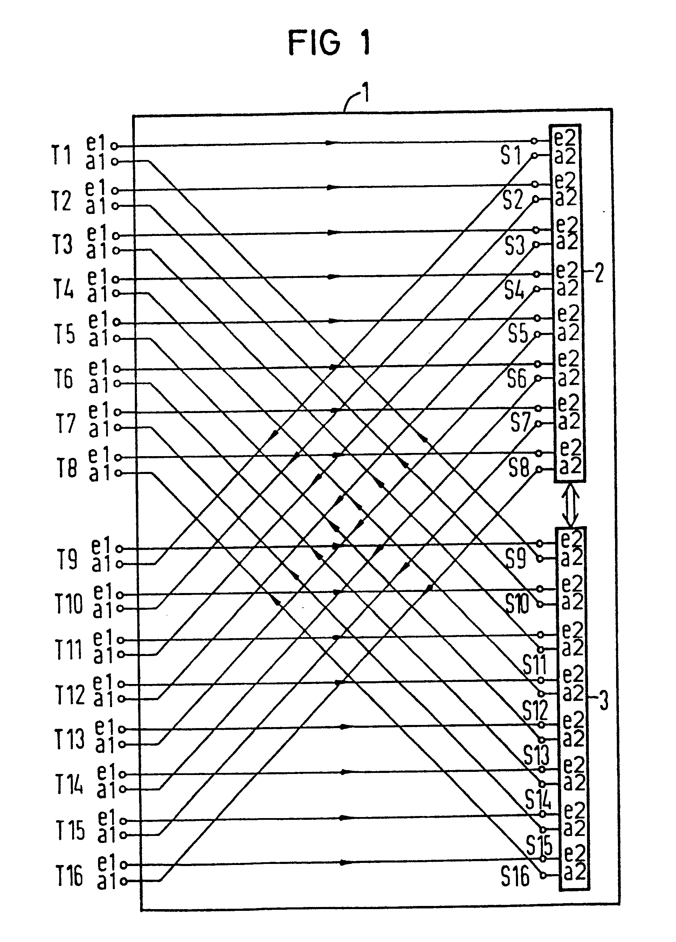

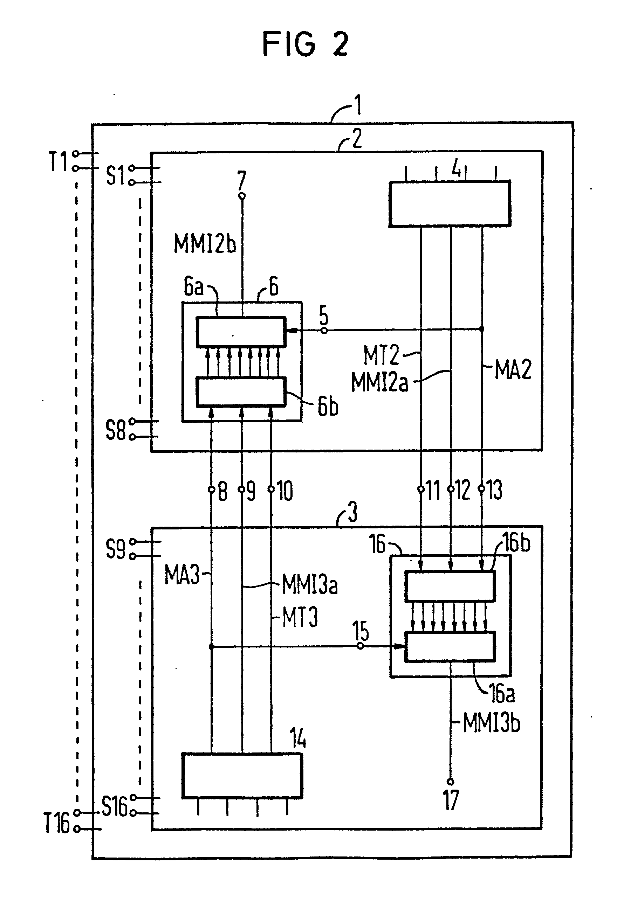

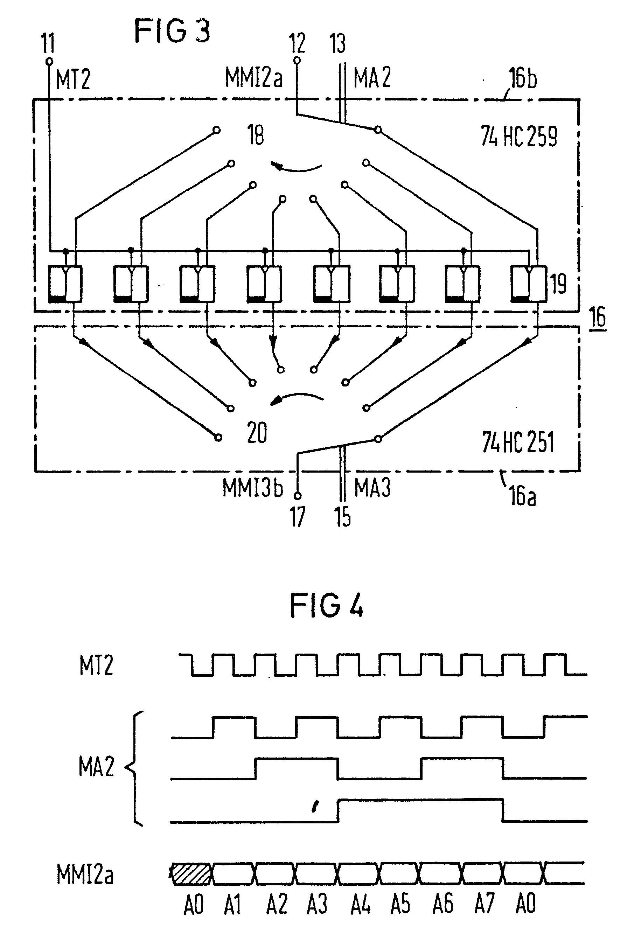

Figur 1 zeigt einen Digitalsignal-Kanalverteiler 1 mit Toren T1 bis T16, die jeweils einen Eingang e1 und einen Ausgang a1 aufweisen. Er enthält einen Unter-Digitalsignal-Kanalverteiler 2 mit Schnittstellen S1 bis S8, von denen jede einen Eingang e2 und einen Ausgang a2 aufweist, und einen Unter-Digitalsignal-Kanalverteiler 3 mit Schnittstellen S9-S16, denen ebenfalls jeweils ein Eingang e2 und ein Ausgang a2 zugeordnet ist. Die Schnittstellen S1-S16 sind die Tore der Unter-Digitalsignal-Kanalverteiler 2 und 3. Beide sind derart zusammengeschaltet, wie es die Figuren 2 oder 3 zeigen.

Die Eingänge e1 der Tore T1-T8 sind mit den entsprechenden Eingängen e2 der Schnittstellen S1-S8 und die Ausgänge a1 dieser Tore T1-T8 sind mit den entsprechenden Ausgängen a2 der Schnittstellen S9-S16 verbunden. Die Eingänge e1 der Tore T9-T16 sind mit den entsprechenden Eingängen e2 der Schnittstellen S9-S16 und die Ausgänge a1 dieser Tore T9-T16 sind mit den entsprechenden Ausgängen a2 der Schnittstellen S1-S8 verdrahtet.

Diese Zusammenschaltung zeigt, daß der Unter-Digitalsignal-Kanalverteiler 2 nur in Richtung von den Toren T1-T8 zu den Toren T9-T16 rangieren kann, während der Unter-Digitalsignal-Kanalverteiler 3 die Gegenrichtung von den Toren T9-T16 zu den Toren T1-T9 übernimmt.

Figur 2 zeigt den Digitalsignal-Kanalverteiler 1 und die Unter-Digitalsignal-Kanalverteiler 2 und 3, die wie in Figur 1 verdrahtet sind und Schaltungsanpassungen gemäß der ersten Variante aufweisen.

Die Unter-Digitalsignal-Kanalverteiler 2 und 3 enthalten in bekannter Weise Überwachungen 4 bzw. 14, in denen die Multiplex-Adressen MA2 bzw. MA3, die Multiplex-Melde-Informationen MMI2a bzw. MMI3a und die Multiplextakte MT2 bzw. MT3 anliegen, sowie Taktanpassungen 6 und 16, denen die Multiplex-Adressen MA2 und Ma3 über die Anschlüsse 5 und 15 zugeführt werden. Die Taktanpassungen 6 und 16 enthalten jeweils einen 8-auf-1-Multiplexer 6a und 16a (jeweils eine integrierte Schaltung 74 HC 251) und jeweils acht adressierbare zustandsmäßig arbeitende RS-Kippstufen (adressierbare 8-bit-latches) 6b und 16b (jeweils eine integrierte Schaltung 74 HC 259).

Die Multiplex-Adressen MA3 werden über den Anschluß 8, die multiplex-Melde-Informationen MMI3a werden über den Anschluß 9 und der Multiplextakt MT3 wird über den Anschluß 10 dem adressierbaren 8-bit-latch 6b in der Taktanpassung 6 zugeführt. Der 8-auf-1-Multiplexer 6a bündelt — gesteuert von den Multiplex-Adressen MA2 am Anschluß 5 — die Ausgangssignale des 8-bit-latches 6b und gibt sie als Multiplex-Melde-Information MMI2b an den Anschluß 7 ab.

Der Multiplextakt MT2 gelangt über den Anschluß 11, die Multiplex-Melde-Informationen MMI2a gelangen über den Anschluß 12 und die Multiplex-Adressen MA2 gelangen über den Anschluß 13 zu dem adressierbaren 8-bit-latch 16b in der Taktanpassung 16. Der 8-auf-1-Multiplexer 16a bündelt — von den Multiplex-Adressen MA3 am Anschluß 15 gesteuert — die Ausgangssignale des 8-bit-latches 16b und gibt sie so als Multiplex-Melde-Information MMI3b an den Anschluß 17 ab.

Figur 3 zeigt ein Prinzipschaltbild der Taktanpassung 16, die mit integrierten Schaltungen 74 HC 251 (16a) und 74 HC 259 (16b) realisiert ist. Die integrierte Schaltung 74 HC 259 kann in der hier benutzten Betriebsart dargestellt werden durch einen Demultiplexer 18 und acht D-Flipflops, von denen das rechts außen angeordnete mit 19 bezeichnet ist, und die integrierte Schaltung 74 HC 251 enthält einen Multiplexer 20.

Figur 4 zeigt den Multiplextakt MT2 und die Multiplex-Adressen MA2 deren drei Pulse in einer Periode des Multiplextakts MT2 ein dreistelliges Codewort bilden, die Adressen A0 bis A7 für die Tore sind. Die Multiplex-Melde-Information MMI2a überträgt, was durch Strichlierung in Figur 4 angedeutet ist, in Figur 3 Informationen für das erste Tor T1 über den Multiplexer 18, das eingeschaltete D-Flipflop 19 und den Demultiplexer 20. Die Multiplex-Melde-Information MMI2a wird also im Demultiplexer 18 aufgelöst und im Multiplexer 20 von den Multiplex-Adressen MA3 gesteuert als Multiplex-Melde-Information MMI3b jetzt im Takt des Unter-Digitalsignal-Kanalverteilers 3 zusammengesetzt.

Multiplex-Melde-Informationen MMI2a enthalten beispielsweise dringende und nichtdringende Alarmmeldung oder Alarmmeldungen der Kennzeichenrahmen, die an die mit den Toren T1-T8 verbundenen Geräte zurückgegeben werden müssen. Sie werden daher über den Anschluß 17 dem Unter-Digitalsignal-Kanalverteiler 3 zugeführt, der die Rückmeldungen über die Ausgänge a1 der Tore T1-T8 abgibt.

Die Taktanpassungen 16 bewirkt, daß die Multiplex-Melde-Informationen MMI2a bei gleichzeitiger Lieferung des Multiplextaktes MT2 und der Multiplex-Adressen MA2, die die Zuordnung von Melde-Informationen zu den einzelnen Toren T1-T8 ermöglichen, an die Multiplex-Adressen MA3 des Unter-Digitalsignal-Kanalverteilers 3 angepaßt werden. Die Multiplex-Melde-Informationen MMI3a der Gegenrichtung werden entsprechend behandelt.

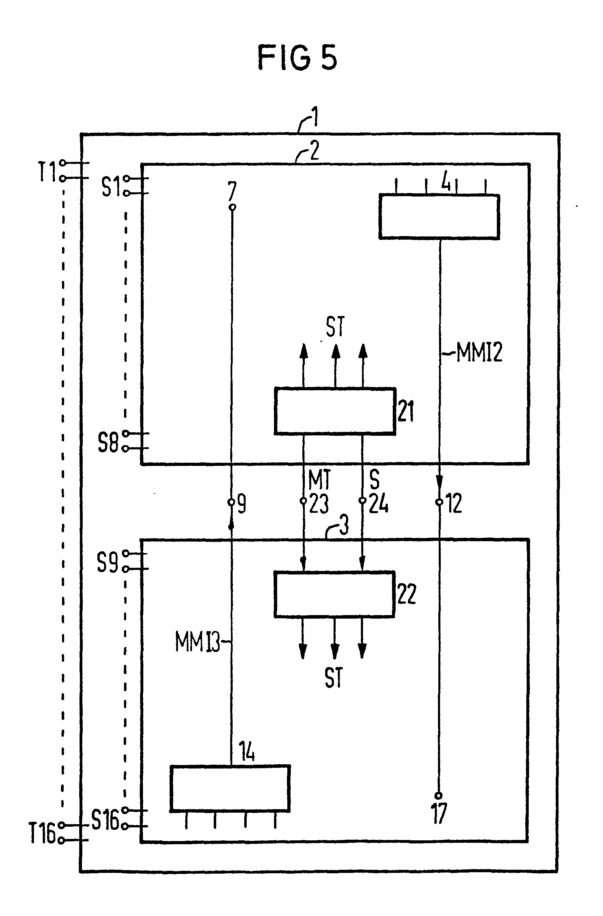

Figur 5 zeigt den Digitalsignal-Kanalverteiler 1 und die Unter-Digitalsignal-Kanalverteiler 2 und 3 wie in Figur 1 mit Schaltungsanpassungen gemäß der zweiten Variante. Gegenüber der ersten Variante in Figur 2 sind die Taktanpassungen 6 und 16 sowie die Verbindungen 5, 8, 10, 11, 13 und 15 entfallen. Der Unter-Digitalsignal-Kanalverteiler 2 enthält dafür als «Master» eine Synchronisiereinrichtung 21, die einen Multiplextakt MT und einen Synchronisier- bzw. Rücksetzimpuls S an die Taktversorgung 22 des Unter-Digitalsignal-Kanalverteilers 3 als «Slave» abgibt. Der Synchronisier- bzw. Rücksetzimpuls S wird an den Cleareingang einer Taktteilerkette (Binärzähler) angelegt. Eine Synchronisierung ist auch über Setz-(«Preset»-Eingänge möglich und üblich.

Auch bei dieser Anordnung müssen die Multiplex-Melde-Informationen MMI2 und MMI3 dem jeweils anderen Unter-Digitalsignal-Kanalverteiler 2 bzw. 3 übermittelt werden. Es erübrigt sich jedoch eine Taktanpassung, weil der Unter-Digitalsignal-Kanalverteiler 3 nicht mit einem eigenen Multiplextakt arbeitet und mittels des Rücksetzimpulses S seine Multiplex-Adressen synchron mit denen des Unter-Digitalsignal-Kanalverteilers 2 gebildet werden.

Der Multiplextakt MT steuert über Steuertakte ST, wie beispielsweise die Multiplex-Adressen MA2 und MA3, alle Gerätefunktionen in den Unter-Digitalsignal-Kanalverteilern 2 und 3. Damit alle Steuertakte ST synchron sind, wird die Taktversorgung 22 des Slave-Geräts 3 vom Master-Gerät 2 beispielsweise durch die periodischen Rücksetzimpulse S synchronisiert. Dadurch sind auch die Multiplex-Melde-Informationen MMI2 und MMI3 zueinander synchron und bedürfen keiner Taktanpassung.

**Patentansprüche**

1. Digitalsignal-Kanalverteiler (1, Fig. 1 und 2) mit n aus jeweils einem Eingang (e1) und einem Ausgang (a1) bestehenden Toren (T1-T16), mit einem ersten Unter-Digitalsignal-Kanalverteiler (2) mit n/2 aus jeweils einem Eingang (e2) und einem Ausgang (a2)

bestehenden schnittstellen (S1-S8), deren Eingänge (e2) mit den entsprechenden Eingängen (e1) der ersten Hälfte der Tore entsprechenden (T1-T8) und deren Ausgänge (a2) mit den entsprechenden Ausgängen (a1) der zweiten Hälfte der Tore (T9-T16) verbunden sind, und mit einer Überwachung (4), die Multiplex-Adressen (MA2), Multiplex-Melde-Informationen (MMI2a) und einen Multiplextakt (MT2) abgibt, sowie mit einem zweiten Unter-Digitalsignal-Kanalverteiler (3) mit n/2 aus jeweils einem Eingang (e2) und einem Ausgang (a2) bestehenden Schnittstellen (S9-S16), deren Eingänge (e2) mit den entsprechenden Eingängen (e1) der zweiten Hälfte der Tore (T9-T16) und deren Ausgänge (a2) mit den entsprechenden Ausgängen (a1) der ersten Hälfte der Tore (T1-T8) verbunden sind, und mit einer Überwachung (14), die Multiplex-Adressen (MA3), Multiplex-Melde-Informationen (MMI3a) und einen Multiplextakt (MT3) abgibt, dadurch gekennzeichnet, daß in jedem Unter-Digitalsignal-Kanalverteiler (2, 3) eine von den eigenen Multiplex-Adressen (MA2, MA3) gesteuerte Taktanpassung (6, 16) für Multiplex-Melde-Informationen (MMI2a, MMI3a) vorgesehen ist und daß Verbindungen (8-13) für die Multiplex-Adressen (MA2, MA3), Multiplex-Melde-Informationen (MMI2a, MMI3a) und die Multiplextakte (MT2, MT3) von der Überwachung (4) des ersten Unter-Digitalsignal-Kanalverteilers (2) zur Taktanpassung (16) des zweiten Unter-Digitalsignal-Kanalverteilers (3) und von der Überwachung (14) des zweiten Unter-Digitalsignal-Kanalverteilers (3) zur Taktanpassung (6) des ersten Unter-Digitalsignal-Kanalverteilers (2) vorgesehen sind.

2. Digitalsignal-Kanalverteiler (1, Fig. 1 und 5) mit n aus jeweils einem Eingang (e1) und einem Ausgang (a1) bestehenden Toren (T1-T16), mit einem ersten Unter-Digitalsignal-Kanalverteiler (2) mit n/2 aus jeweils einem Eingang (e2) und einem Ausgang (a2) bestehenden Schnittstellen (S1-S8), deren Eingänge (e2) mit den entsprechenden Eingängen (e1) der ersten Hälfte der Tore (T1-T8) und deren Ausgänge (a2) mit den entsprechenden Ausgängen (a1) der zweiten Hälfte der Tore (T9-T16) verbunden sind, und mit einer Überwachung (4), die Multiplex-Melde-Informationen (MMI2) abgibt, sowie mit einem zweiten Unter-Digitalsignal-Kanalverteiler (3) mit n/2 aus jeweils einem Eingang (e2) und einem Ausgang (a2) bestehenden Schnittstellen (S9-S16), deren Eingänge (e2) mit den entsprechenden Eingängen (e1) der zweiten Hälfte der Tore (T9-T16) und deren Ausgänge (a2) mit den entsprechenden Ausgängen (a1) der ersten Hälfte der Tore (T1-T8) verbunden sind, und mit einer Überwachung (14), die Multiplex-Melde-Informationen (MMI3) abgibt, dadurch gekennzeichnet, daß in einem der beiden Unter-Digitalsignal-Kanalverteiler (2) als «Master» eine Synchronisiereinrichtung (21) vorgesehen ist, die an die Taktversorgung (22) des anderen Unter-Digitalsignal-Kanalverteilers (3) ihren Multiplextakt (MT) und ein Synchronisier(Rücksetz)-Signal (S) abgibt und daß Verbindungen (9, 12) für die Multiplex-Melde-Informationen (MMI2, MMI3) von der Überwachung (4) des ersten Unter-Digitalsignal-Kanalverteilers (2) zu einem Multiplex-Meldeinformationsausgang (17) des zweiten Unter-Digitalsignal-Kanalverteilers (3) und von der Überwachung (14) des zweiten Unter-Digitalsignal-Kanalverteilers (3) zu einem Multiplex-Meldeinformationsausgang (7) des ersten Unter-Digitalsignal-Kanalverteilers (2) vorgesehen sind.

Claims

1. Digital signal channel distributor (1, Fig. 1 and 2), with ports (T1-T16) consisting in each case of an input (e1) and an output (a1), with a first digital signal channel sub-distributor (2) with n/2 interfaces (S1-S8) consisting in each case of an input (e2) and an output (a2), the inputs (e2) of which are connected to the corresponding inputs (e1) of the first half of the ports (T1-T8) and the outputs (a2) of which are connected to the corresponding outputs (a1) of the second half of the ports (T9-T16), and with a supervision unit (4) which delivers multiplex addresses (MA2), multiplex signalling information items (MMI2a) and a multiplex clock (MT2) and with a second digital signal channel sub-distributor (3) with n/2 interfaces (S9-S16) consisting in each case of an input (e2) and an output (a2), the inputs (e2) of which are connected to the corresponding inputs (e1) of the second half of the ports (T9-T16) and the outputs (a2) of which are connected to the corresponding outputs (a1) of the first half of the ports (T1-T8), and with a supervision unit (14) which delivers multiplex adresses (MA3), multiplex signalling information items (MMI3) and a multiplex clock (MT3), characterized in that a clock adaptor (6, 16), controlled by the own multiplex addresses (MA2, MA3), is provided for multiplex signalling information items (MMI2a, MMI3a) in each digital signal channel sub-distributor (2, 3) and, in that connections (8-13) for the multiplex addresses (MA2, MA3), multiplex signalling information items (MMI2a, MMI3a) and the multiplex clocks (MT2, MT3) are provided from the supervision unit (4) of the first digital signal channel sub-distributor (2) to the clock adaptor (16) of the second digital signal channel sub-distributor (3) and from the supervision unit (14) of the second digital signal channel sub-distributor (3) to the clock adaptor (6) of the first digital signal channel sub-distributor (2).

2. Digital signal channel distributor (1, Fig. 1 and 5) ports (T1-T16), consisting in each case of an input (e1) and an output (a1), with a first digital signal channel sub-distributor (2) with n/2 interfaces (S1-S8) consisting in each case of an input (e2) and an output (a2), the inputs (e2) of which are connected to the corresponding inputs (e1) of the first half of the ports (T1-T8) and the outputs (a2) of which are connected to the corresponding outputs (a1) of the second half of the ports (T9-T16), and with a supervision unit (4) which delivers multiplex signalling information items (MMI2) and with a second digital signal channel sub-distributor (3) with n/2 interfaces (S9-S16) consisting in each case of an input (e2) and an output (a2), the inputs (e2) of which are connected to the corresponding inputs (e1) of the second half of the ports (T9-T16) and the outputs (a2) of which are connected to the corresponding outputs (a1) of the first half of the ports (T1-T8), and a with a supervision unit (14) which delivers multiplex signalling information items (MMI3), characterized in that in one of the two diogital signal channel sub-distributors (2), a synchronizing device (21) is provided as «master» which delivers to the clock supply (22) of the other digital signal channel sub-distributor (3) its multiplex clock (MT) and a synchronizing (reset) signal (S) and in that connections (9, 12) for the multiplex signalling information items (MMI2, MMI3) are provided from the supervision unit (4) of the first digital signal channel sub-distributor (2) to a multiplex signalling information output (17) of the second digital signal channel sub-distributor (3) and from the supervision unit (14) of the second digital signal channel sub-distributor (3) to a multiplex signalling information output (7) of the first digital signal channel sub-distributor (2).

**Revendications**

1. Commutateur de voies (1, figures 1 et 2), pour signaux numériques à n portes (T1-T16) formées chacune d'une entrée (e1) et d'une sortie (a1), comprenant un premier sous-commutateur de voies (2) pour signaux numériques, à n/2 interfaces (S1-S8) formées chacune d'une entrée (e2) et d'une sortie (a2), dont les entrées (e2) sont reliées aux entrées (e1) correspondantes de la première moitié des portes (T1-T8) et dont les sorties (a2) sont reliées aux sorties (a1) correspondantes de la seconde moitié des portes (T9-T16) et un dispositif de surveillance (4) qui délivre des adresses multiplex (MA2), des informations de signalisation multiplex (MMI2a) et un rythme multiplex (MT2), de même qu'un second sous-commutateur de voies (3) pour signaux numériques, à n/2 interfaces (S9-S16) formées chacune d'une entrée (e2) et d'une sortie (a2), dont les entrées (e2) sont reliées aux entrées (e1) correspondantes de la seconde moitié des portes (T9-T16) et dont les sorties (a2) sont reliées aux sorties (a1) correspondantes de la première moitié des portes (T1-T8), et un dispositif de surveillance (14) qui délivre des adresses multiplex (MA3), des informations de signalisation multiplex (MMI3a) et un rythme multiplex (MT3), caractérisé en ce qu'un dispositif d'adaptation de rythme (6, 16) pour informations de signalisation multiplex (MMI2a, MMI3a) est prévu dans chaque sous-commutateur de voies (2, 3), dispositif d'adaptation de rythme qui est commandé par les adresses multiplex (MA2, MA3) propres, et que des liaisons (8-13) sont prévues pour les adresses multiplex (MA2, MA3), les informations de signalisation multiplex (MMI2a, MMI3a) et les rythmes multiplex (MT2, MT3) depuis le dispositif de surveillance (4) du premier sous-commutateur de voies (2) au dispositif d'adaptation de rythme (16) du second sous-commutateur de voies (3) et depuis le dispositif de surveillance (14) du second sous-commutateur de voies (3) au dispositif d'adaptation de rythme (6) du premier sous-commutateur de voies (2).

2. Commutateur de voies (1, figures 1 et 5) pour signaux numérique, à n portes (T1-T16) formées chacune d'une entrée (e1) et d'une sortie (a1), comprenant un premier sous-commutateur (2) pour signaux numériques, à n/2 interfaces (S1-S8) formées chacune d'une entrée (e2) et d'une sortie (a2), dont les entrées (e2) sont reliées aux entrées (e1) correspondantes de la première moitié des portes (T1-T8) et dont les sorties (a2) sont reliées aux sorties (a1) correspondantes de la seconde moitié des portes (T9-T6), et un dispositif de surveillance (4) qui délivre des informations de signalisation multiplex (MMI2), de même qu'un second commutateur de voies (3) pour signaux numériques, à n/2 interfaces (S9-S16) formées chacune d'une entrée (e2) et d'une sortie (a2), dont les entrées (e2) sont reliées aux entrées (e1) correspondantes de la seconde moitié des portes (T9-T16) et dont les sorties (a2) sont reliées aux sorties (a1) correspondantes de la première moitié des portes (T1-T8), et un dispositif de surveillance (14) qui délivre des informations de signalisation multiplex (MMI3), caractérisé en ce qu'un dispositif de synchronisation (21) est prévu dans l'un des deux sous-commutateurs de voies (2), agissant comme «maître», dispositif qui délivre son rythme multiplex (MT) et un signal (S) de synchronisation (de remise à l'état initial) au générateur de rythme (22) de l'autre sous-commutateur de voies (3) et que des liaisons (9, 12) pour les informations de signalisation multiplex (MMI2, MMI3) sont prévues depuis le dispositif de surveillance (4) du premier sous-commutateur de voies (2) à une sortie (17) d'informations de signalisation multiplex du second sous-commutateur de voies (3) et depuis le dispositif de surveillance (14) du second sous-commutateur de voies (3) à une sortie (7) d'informations de signalisation multiplex du premier sous-commutateur de voies (2).

# FIG 1

# FIG 2

# FIG 3

# FIG 4

# FIG 5